# EUROPÄISCHE PATENTSCHRIFT

(11) **EP 3 122 510 B1**
(45) Veröffentlichungstag und Bekanntmachung des Hinweises auf die Patenterteilung: **14.08.2019**
(21) Anmeldenummer: 15715965.8
(22) Anmeldetag: 13.03.2015
(51) Int. Cl.: B23K 31/12, B23K 20/12

(54) **VERFAHREN UND VORRICHTUNG ZUR ERHÖHUNG DER QUALITÄT DER SCHWEISSNAHT BEIM RÜHRREIBSCHWEISSEN**
METHOD AND APPARATUS FOR IMPROVING THE WELD QUALITY IN FRICTION STIR WELDING
PROCÉDÉ ET APPAREIL POUR AMÉLIORER LA QUALITÉ DE SOUDURE EN SOUDAGE PAR AGITATION-FRICTION

(30) Priorität: 26.03.2014 DE 102014004331
(43) Veröffentlichungstag der Anmeldung: 01.02.2017
(73) Patentinhaber: Grenzebach Maschinenbau GmbH, 86663 Asbach-Bäumenheim (DE)
(72) Erfinder: WEIGL, Markus, 86609 Donauwörth (DE)
(74) Vertreter: Kindermann, Peter
(86) Internationale Anmeldenummer: PCT/DE2015/000116
(87) Internationale Veröffentlichungsnummer: WO 2015/144115

(56) Entgegenhaltungen:
- DE-B3-102012 010 836
- DE-U1-202014 000 747
- US-A1- 2014 077 668

## Beschreibung

Aus der DE 10 2004 030 381 B3 ist ein Verfahren zur Online - Qualitätsprüfung beim Reibrührschweißen bekannt, dem die Zielsetzung zugrunde liegt, zuverlässig und einfach zu sein.

Zur Erreichung dieser Zielsetzung wird beansprucht, dass ein Reibrührwerkzeug unter drehender Bewegung und Druckbeaufschlagung in das Material zu verschweißender Werkstücke eingeführt und entlang einer Verbindungsstelle der zu verschweißenden Werkstücke geführt wird, wobei die Druckbeaufschlagung und / oder die während des Reibrührschweißprozesses auftretenden Schwingungen des Reibrührwerkzeugs, der zu verschweißenden Werkstücke oder anderer durch den Schweißprozess angeregter Elemente in Abhängigkeit der Zeit gemessen werden und anschließend mittels Fourier - Transformation in Freguenz-Amplitudenspektren umgewandelt werden, und dass die ermittelten Freguenz-Amplitudenspektren zur Qualitätsprüfung der erzeugten Schweißverbindung mit Referenzwerten verglichen werden.

Weiter ist aus der WO 2007/006669 A1 ein Rührreibschweißwerkzeug sowie ein Verfahren und eine Anordnung zur Echtzeit - Kontrolle eines Rührreibschweißprozesses durch Erfassung der Beschleunigungskräfte und / oder Schwingungen an dem Werkzeugkörper bekannt.

Dieser Druckschrift liegt die Zielsetzung zugrunde, ein kompaktes, universell einsetzbares Rührreibschweißwerkzeug sowie ein Verfahren und eine Anordnung zur Echtzeit - Kontrolle eines Rührreibschweißprozesses bereit zu stellen, mit denen es gelingt, den Fügeprozess einfach und kostengünstig zu optimieren, sodass in seinem Ergebnis eine den Qualitätsanforderungen entsprechende Fügenaht ohne notwendige Nachbearbeitung entsteht und die Belastung der Rührreibschweißanlage minimiert wird. Erreicht wird diese Zielsetzung mit einem Rührreibschweißwerkzeug bestehend aus einem Werkzeuggrundkörper und einem Werkzeugrührbolzen mit einer Schulter und einem Stift, das nach dem Anspruch 1 dadurch gekennzeichnet ist, dass im Werkzeuggrundkörper mindestens ein Sensor zur Erfassung der auf den Werkzeuggrundkörper wirkenden Beschleunigungskräfte integriert ist.

Aus der WO 2013/182182 A1 ist ferner ein Rührreib-Schweißwerkzeug und ein Verfahren zur Herstellung desselben bekannt. Dieser Druckschrift liegt im Wesentlichen die Zielsetzung zugrunde, ein solches Werkzeug hinsichtlich seiner Standzeit zu verbessern. Zu diesem Zweck soll eine Sonde die dem Aufbringen von Reibungswärme dient, einen aus einem ersten Werkstoff gebildeten ersten Sondenbereich und einen aus einem zweiten Werkstoff gebildeten zweiten Sondenbereich umfassen.

Aus der, auf die Anmelderin zurückgehenden, DE 10 2012 010 836 B3 sind ein Verfahren und eine Vorrichtung zur Verbesserung der Qualität der Schweißnaht beim Rührreibschweißen bekannt, der die Zielsetzung zugrunde liegen, die Standzeit des Rührreibwerkzeugs von ca. 2 Stunden auf 15 Stunden zu erhöhen und die Qualität der Fügenaht so zu erhöhen, dass keinerlei Nachbearbeitung erforderlich ist.

Bei der Beendigung des Schweiß-Prozesses tritt das Problem auf, dass die, aus den Fügepartnern austretende, Reibschweißspitze entweder einen erhöhten Materialauswurf verursacht, oder, bei einer geringeren Lochtiefe, eine längere Spur des Austritt-Prozesses verursacht. In beiden Fällen ist eine mehr oder weniger aufwendige, und damit Kosten verursachende, Nacharbeit erforderlich. Hierunter leidet auch die Festigkeit der erzeugten Schweißnaht, weil der Prozess der Plastifizierung und anschließenden Erkaltung der Fügepartner durch das mehr oder weniger abrupte Austreten der Rührreibspitze aus der plastifizierten Masse der Fügepartner das Gesamtgefüge der verschweißten Materialien stört und somit bei starken Belastungen der Schweißnaht die Gefahr eines Anrisses erhöht.

Aus der US 2014/0077668 A1 ist eine Vorrichtung und ein Verfahren zum Erzeugen einer Schweißnaht beim Rührreibschweißen bekannt, wobei eine kegelförmige Schweißpin-Spitze verwendet wird, die Abplattungen in einem Winkel von 120 Grad aufweist.

Aus der den Oberbegriff des Patentanspruchs 1 bildenden Druckschrift DE 20 2014 000 747 U1 ist eine Vorrichtung zur Erhöhung der Qualität einer Schweißnaht beim Rührreibschweißen bekannt, die eine Aufnahmeplatte mit einem Antriebskopf aufweist, wobei dieser einen Aufnahmeflansch zur Aufnahme einer Halteglocke aufweist, die mittels einer Überwurfmutter mit einem Schweißschuh mit einer Schweißpin-Spitze verbunden ist, der Schweißschuh eine kreisrunde Grundform aufweist, auf der sich, über den Querschnitt verlaufend und im rechten Winkel zu dieser Grundform erhebend, ein Quersteg befindet, der ungefähr die Breite von 1/4 bis 1/5 des Durchmessers der Grundform aufweist und eine bogenförmige Schuh-Gleitfläche und Schuh-Glättfläche aufweist, wobei sich auf jeder Seite dieser Fläche im Bereich des Randes dieser Fläche eine kleine ebene Fläche in der Form einer kerbartigen Verjüngung befindet.

Der Erfindung liegt die Aufgabe zugrunde, eine Vorrichtung und ein Verfahren zur Erhöhung der Qualität einer Schweißnaht beim Rührreibschweißen zu schaffen, wobei eine Oberfläche verbessert, und ein sogenanntes Endloch am Ende von Schweißnähten sowie eine Verschmutzung am Werkzeug vermieden wird.

Erfindungsgemäß wird diese Aufgabe hinsichtlich der Vorrichtung durch die kennzeichnenden Merkmale des neuen Patentanspruchs 1 und hinsichtlich des Verfahrens durch die Maßnahmen des neuen Patentanspruchs 4 gelöst.

In den Unteransprüchen sind weitere vorteilhafte Ausgestaltungen der Erfindung gekennzeichnet.

Die erfindungsgemäße Vorrichtung wird im Folgenden näher beschrieben.

Es zeigen im Einzelnen:
Fig. 1: eine Seitenansicht einer Anordnung zum Rührreibschweißen
Fig. 2: eine Folge von Darstellungen des Schweißvorgangs
Fig. 3: eine Darstellung eines Schweißschuhs
Fig. 4: eine Darstellung einer erfindungsgemäßen Bauform des obigen Schweißschuhs
Fig. 5: eine Darstellung eines Dichtungspakets
Fig. 6: eine Darstellung der Gesamt-Halterung einer Schweißpin-Spitze 5

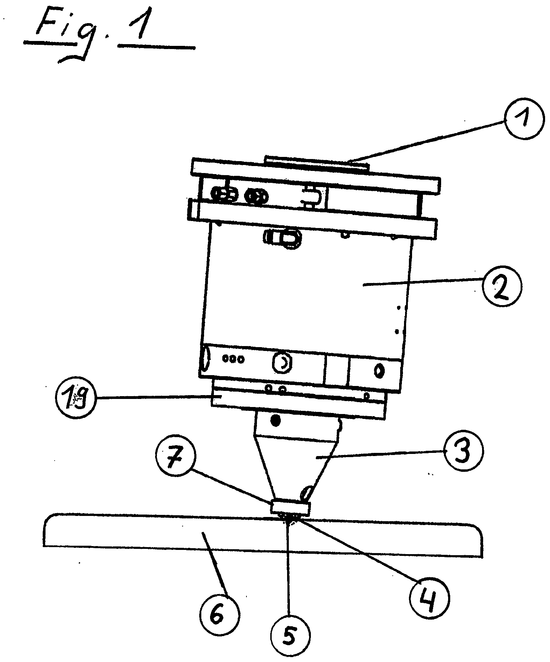

Die Fig. 1 zeigt eine Seitenansicht einer Anordnung zum Rührreibschweißen. Eine Aufnahmeplatte 1, die von einem Roboterarm geführt sein kann, trägt einen Antriebskopf 2 mit einer Halteglocke 3 die mittels eines Aufnahmeflansches 19 am Antriebskopf 2 befestigt ist. Die Halteglocke 3 dient zur Aufnahme eines Schweißschuhs 4 mit einem Pinlager für einen Schweißpin, wobei der Schweißschuh 4 mittels einer Überwurfmutter 7 auf der Halteglocke 3 befestigt und gegen unbeabsichtigtes Verdrehen gesichert ist. Das zu fügende Bauteil 6 wird von einer Schweißpin-Spitze 5 bearbeitet.

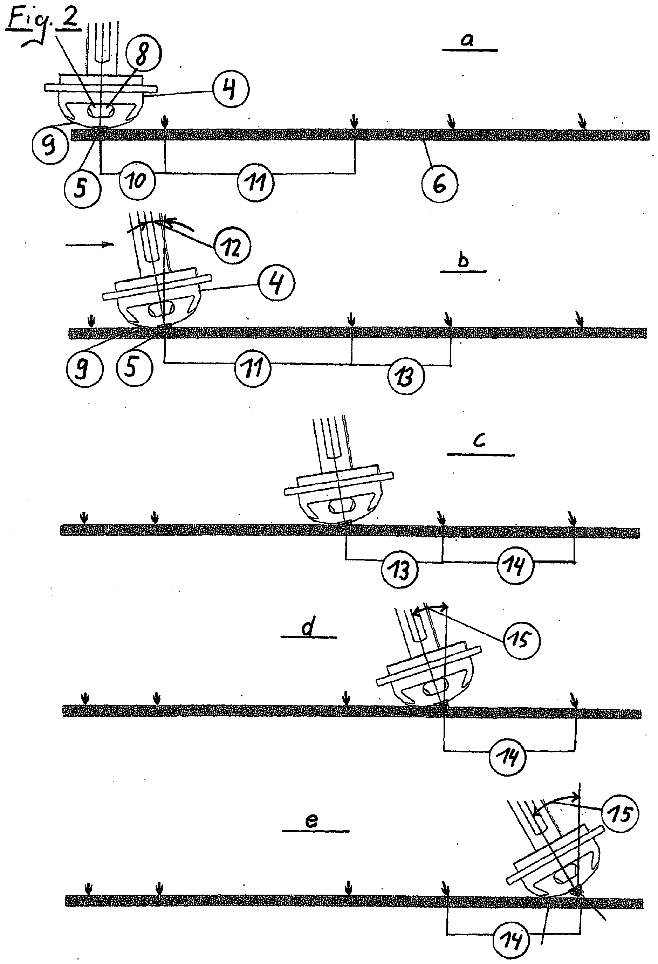

Die Fig. 2 zeigt eine Folge von Darstellungen des Schweißvorgangs.

Der gezeigte Schweißschuh 4 ist hier während des Schweißvorgangs in fünf verschieden Positionen a) bis e) entsprechend dem Fortgang des Prozesses gezeigt. In der Position 2a) beginnt eine Pin-Eintauchstrecke 10, bei der eine Schweißpin-Spitze 5 in das zu fügende Bauteil 6 eintaucht. Die Eintauchstrecke 10 kann auch entfallen, das heißt der gesamte Eintauchvorgang erfolgt an einer bestimmten Stelle. Typischerweise dringt die Schweißpin-Spitze 5 senkrecht zur Werkstückoberseite ein und wird dann auf den Anstellwinkel 12 eingestellt. Gefolgt wird die Pin -Eintauchstecke 10 von der eigentlichen Schweißstrecke 11. Besonders gekennzeichnet sind hier die Schuh-Gleitfläche und Schuh-Glättfläche 9 und der Austrittsbereich für Schweiß-Material 8. In der Position 2b) befindet sich der Schweißschuh 4 am Beginn der Schweißstrecke 11, wobei der Schweißschuh 4 mit einem Anstellwinkel 12, den das gesamte Schweißwerkzeug gegen die Vertikale aufweist, in das zu fügende Bauteil 6 eintaucht.

Die Bezugszeichen 5 und 9 sind aus der Position 2a) bekannt. Der Schweißstrecke 11 folgt eine Pin-Auslaufstrecke 13.

In der Position 2c) ist der Schweißschuh 4 am Beginn der Pin-Auslaufstrecke 13 gezeigt, der eine Pin-Ausdrehstrecke 14 folgt.

Der Position 2d) ist zu entnehmen, dass der Schweißschuh am Beginn der Pin-Ausdrehstrecke 14 einen Pin-Ausdrehwinkel 15, gemessen von der Vertikalen aus, aufweist, der bis zum Ende der Pin-Ausdrehstrecke 14 sich leicht vergrößert, wobei der Schweißschuh sich am Ende der Ausdrehstrecke 14, unter steter Vergrößerung des Pin-Ausdrehwinkels 15, weiter bewegt und plastifiziertes Material verdichtet und sich dann von dem zu fügenden Bauteil 6 abhebt. Dieser Sachverhalt ist in der Position 2e) gezeigt. Wichtig hierbei ist, dass der Schweißschuh alle Bereiche der Schweißnaht überfährt, welche die Schweißpin-Spitze 5 vorher aufgerührt hat. Dies entspricht einer "Kaltverdichtung" der Ausdrehstrecke.

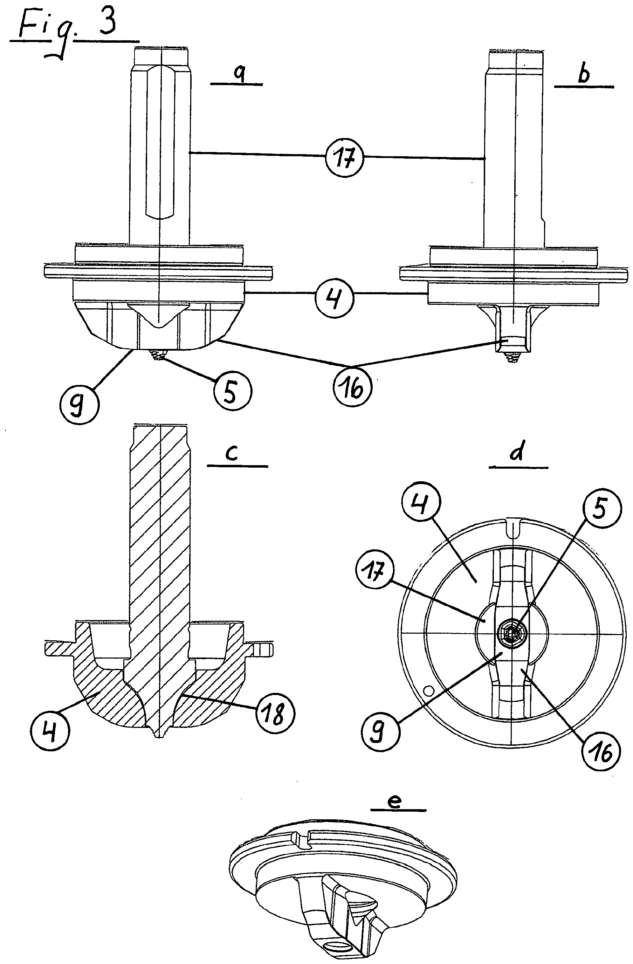

Die Fig. 3 zeigt die Darstellung eines beispielhaften Schweißschuhs.

In der Fig. 3a ist dieser Schweißschuh 4 zu sehen. Besonders gekennzeichnet ist hier auf der rechten Seite eine kerbartige Verjüngung 16 in der Schuh-Gleitfläche und Schuh-Glättfläche 9, wobei dieser Schweißschuh 4 in dieser Ansicht von seiner Breitseite her zu sehen ist. Die beidseitige kerbartige Verjüngung 16 des Schweißschuhs 4 führt zu einer Stromlinien- bzw. bugförmigen Form, wodurch der Schweißschuh 4 unempfindlicher gegen nicht-ideale Orientierung zum so genannten Schweißstoß wird und somit einfacher um zu schweißende Radien geführt werden kann. In diesem Zusammenhang kann man von einer Selbstzentrierung des Schweißschuhs 4 sprechen.

In der Fig. 3b ist derselbe Schweißschuh um 90 Grad gedreht, von seiner schmalen Seite her dargestellt, wobei die in der Fig. 3a gezeigte kerbartige Verjüngung 16 in dieser Ansicht von vorne zu sehen ist.

Die Fig. 3c zeigt den Schweißschuh 4 aus der Fig. 3a im Schnitt. Hier ist besonders das Pin-Lager 18 zu sehen, dessen Querschnittsverlauf in etwa einer "trompetenförmigen Kurve folgt. Die Toleranz im Pin-Lager 18 zwischen dem Pin - Schaft 17 und dem Schweißschuh 4 beträgt etwa 100 µm.

Die Fig. 3d zeigt diesen beispielhaften Schweißschuh 4 in der Sicht von unten. Besonders gekennzeichnet sind hierbei die Schuh-Gleitfläche und Schuh-Glättfläche 9 zusammen mit der bezeichneten kerbartigen Verjüngung 16 und dem Pin-Schaft 17. Die Schweißpin-Spitze 5 ist zentral in der Mitte des Schweißschuhs 4 erkennbar. Im Wesentlichen hat der hier gezeigte Schweißschuh 4 eine kreisrunde Grundform, auf der sich, über den Querschnitt verlaufend, sich im rechten Winkel erhebend, ein Quersteg erhebt der sich ungefähr über die Breite von 1/4 bis zu 1/5 des Durchmessers erstreckt und eine bogenförmige Begrenzungsfläche aufweist, die als Schuh-Gleitfläche und Schuh-Glättfläche 9 fungiert und eine Kontur nach Art eines Kniehebels oder einer Abrollkurve aufweist. Auf dieser bogenförmigen Begrenzungsfläche befindet sich auf jeder Seite im Bereich des Randes zu der kreisrunden Grundform jeweils eine kleine ebene Fläche, die wie jeweils eine kerbähnliche Verjüngung in der Schuh-Gleitfläche und Schuh-Glättfläche 9 wirkt. Die Fig. 3e vermittelt eine räumliche Darstellung des beschriebenen Schweißschuhs 4.

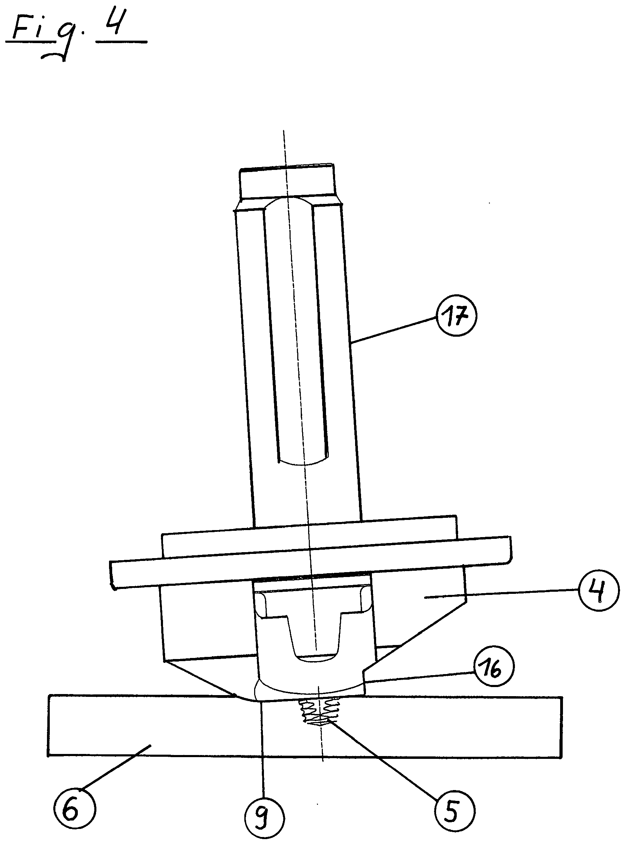

Die Fig. 4 zeigt eine Darstellung einer erfindungsgemäßen Bauform des obigen Schweißschuhs. Dieser Schweißschuh 4 ist hier gezeigt mit seiner Schweißpin-Spitze 5 und seinem Pin-Schaft 17 bei der Bearbeitung eines zu fügenden Bauteils 6. Hierbei ist die Schuh-Gleitfläche und Schuh-Glättfläche 9 dadurch gekennzeichnet, dass die kerbartige Verjüngung 16 als ein mehrere Millimeter hoher Absatz ausgebildet ist. Es handelt es sich dabei sinngemäß um einen so genannten "Freistich", der eine Kompression und Verdichtung des zu fügenden Bauteils beim Auftreffen auf den Schweißschuh 4 deutlich verringert. Zudem ergeben sich bessere Freilaufeigenschaften, das heißt, überschüssiges Material wird leichter abgeführt. Dies äußert sich in einer besser ausgebildeten Nahtoberfläche der Schweißungen und in einem geringeren "Zusetzen" des Schweißschuhs 4. In der gezeigten Darstellung ist der gesamte Schweißschuh 4 in seinem Eingriff in das zu fügende Bauteil 6 stark ausgeprägt hervorgehoben.

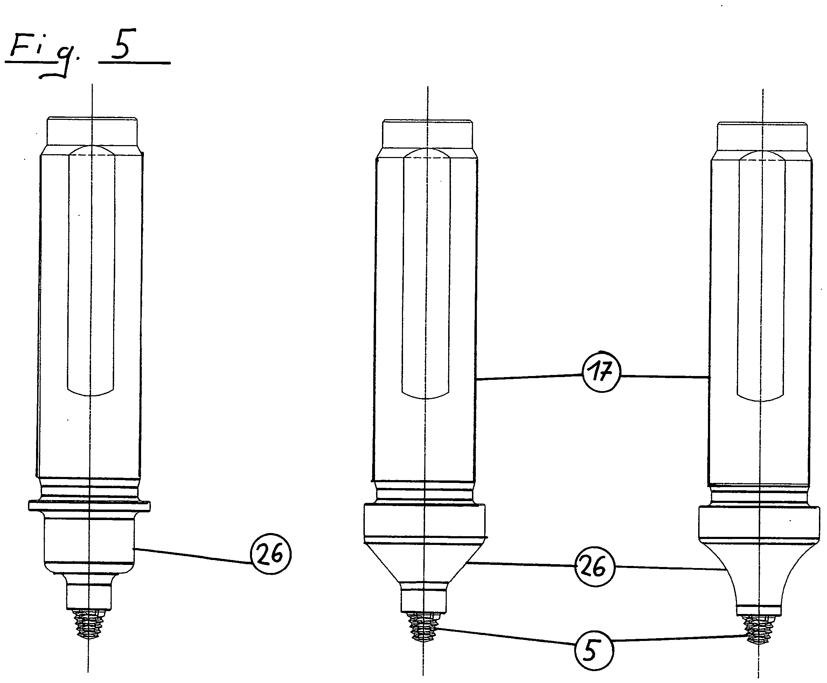

Die Fig. 5 zeigt eine Darstellung von drei Ausformungen eines Dichtungspakets. In diesem Zusammenhang wird nicht von einer Lagerung gesprochen, da neben einer ausreichenden Führung auch eine definierte Abdichtung zum Schweißprozess gewährleistet sein muss. Hierbei ist bevorzugt, dass der Pinhals 26 in seinem Querschnitt die Form des Endstücks einer Trompete aufweist, wie in der rechten Figur gezeigt.

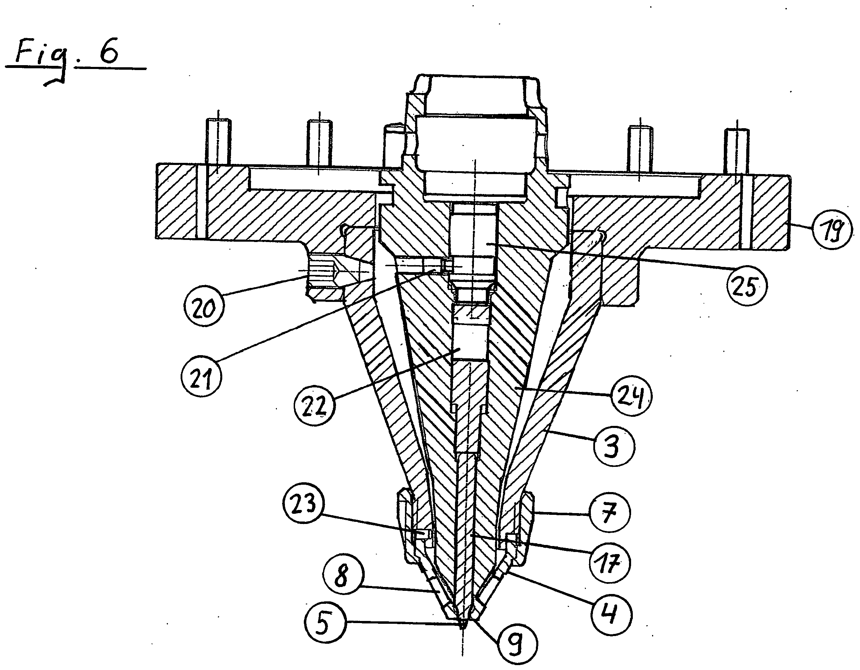

Die Fig. 6 zeigt die Darstellung der Gesamt-Halterung einer Schweißpin-Spitze 5. Als Basis ist hier der Aufnahmeflansch 19 für die Halteglocke 3 zu sehen, wobei eine Halteschraube 20 mit einem Konus für die Halterung der Halteglocke 3 am Aufnahmeflansch 19 dient. Zentral in der Halteglocke 3 ist ein Schweißpin-Haltekegel 24 gelagert, der einen Pin-Schaft 17 umschließt, der über ein Einstellelement 22 mit einem Schweißpin-Gegenlager 25 verbunden ist. Das Schweißpin-Gegenlager 25 ist mittels einer Halteschraube 21 gesichert. Über das Schweißpin-Gegenlager 25 kann eine Grobeinstellung der wirksamen Länge der Schweißpin-Spitze 5 erfolgen, wobei diese mittels eines entsprechenden, nicht näher bezeichneten, Feingewindes erfolgen kann. Eine Feineinstellung der wirksamen Länge der Schweißpin-Spitze 5 kann mittels eines, ebenfalls nicht näher bezeichneten, und elektronisch in der Länge veränderbaren, Piezo-Elements erfolgen.

Mit 9 ist hier wieder die Schuh - Gleitfläche und Schuh-Glättfläche 9 des Schweißschuhs 4 bezeichnet, wobei der Schweißschuh 4 mittels einer Arretierung 23 gegen Verdrehung gesichert ist und mittels einer Überwurfmutter 7 an der Halteglocke 3 befestigt ist. Der Austrittsbereich 8 für das Schweiß-Material des Schweißschuhs 4 ist hier ebenfalls sichtbar. Über den zwischen dem Schweißpin-Haltekegel 24 und der Halteglocke 3 bestehenden beiderseitig sichtbaren Spalt ist bevorzugt vorgesehen, dass hier mittels einer druckerzeugenden, nicht näher bezeichneten, Vorrichtung ein Überdruck erzeugt wird, der dafür sorgt, dass Verschmutzungen am Werkzeug weitgehend beseitigt werden. Dieser Vorgang kann auch durch die Zugabe von Reinigungsflüssigkeit auf der Basis der Nano-Technologie unterstützt werden. Über diese Anlage kann auch durch die Messung des am Werkzeug herrschenden Gegendrucks ermittelt werden, ob der Austrittbereich 8 am Schweißschuh 4 verstopft oder frei ist. In bestimmten Abständen ist weiter bevorzugt vorgesehen, dass ein diesbezüglicher Reinigungszyklus mit ionisierter Luft und / oder geeigneten Lösungsflüssigkeiten durchgeführt wird. Weiterhin ist mittels einer, nicht näher bezeichneten Vorrichtung vorgesehen, dass während des Schweiß-Prozesses entstehendes Überschuss - Material ebenfalls abgesaugt wird.

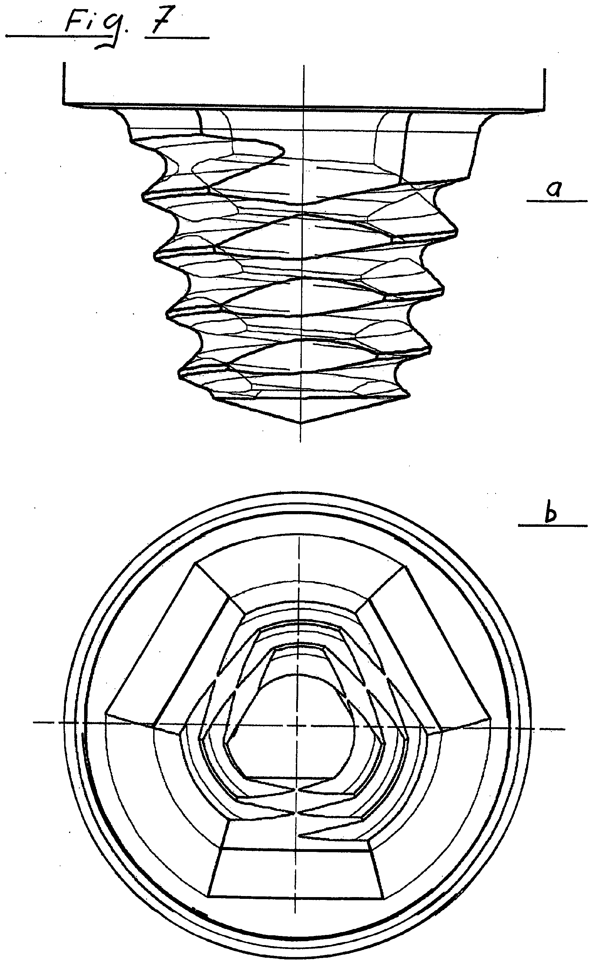

Fig. 7 zeigt eine erfindungsgemäße Form einer Schweißpin-Spitze 5.

In der Fig. 7a ist hier eine vergrößert dargestellte Seitenansicht einer bevorzugten Bauform einer Schweißpin-Spitze zu sehen. Diese Bauform weist im Wesentlichen eine Oberflächenstruktur in der Form eines spitz zulaufenden Gewindes auf. Diese gewindeähnliche Struktur ist jedoch nicht rein kreisförmig angeordnet, sondern weist in jedem Gewindegang 3 am Umfang verteile Abplattungen auf, wobei die Zentren dieser Abplattungen jeweils in einem Winkel von 120 Grad zueinander stehen, wie in der Fig. 7b gezeigt ist. Die Steigung dieser gewindeähnlichen Struktur beträgt 0,5 mm und die Flankenhöhe variiert von 0,25 mm bis 0,05 mm.

Die im Eingriff stehenden Werkzeugteile weisen bevorzugt eine Beschichtung mit ZrCrN oder CrN auf.

### Bezugszeichenliste

- 1: Aufnahmeplatte (Roboterarm)
- 2: Antriebskopf
- 3: Halteglocke für das Werkzeug
- 4: Schweißschuh
- 5: Schweißpin - Spitze
- 6: zu fügendes Bauteil
- 7: Überwurfmutter als Halterung für einen Schweißschuh
- 8: Austrittsbereich für Schweiß - Material
- 9: Schuh - Gleitfläche und Schuh - Glättfläche
- 10: Pin - Eintauchstrecke
- 11: Schweißstrecke (Naht)
- 12: Anstellwinkel des Schweißwerkzeugs
- 13: Pin - Auslaufstrecke
- 14: Pin - Ausdrehstrecke (Winkelzunahme des Anstellwinkels)
- 15: Pin - Ausdrehwinkel
- 16: kerbartige Verjüngung in der Schuh - Glättfläche
- 17: Pin - Schaft
- 18: Dichtungspaket im Schweißschuh
- 19: Aufnahmeflansch für die Halteglocke 3
- 20: Halteschraube mit Konus für die Halteglocke 3
- 21: Halteschraube für den Pin - Anschlag
- 22: Einstellelement für die Pinlänge
- 23: Schweißschuh - Arretierung gegen Verdrehung
- 24: Schweißpin - Haltekegel
- 25: Schweißpin - Gegenlager
- 26: Pinhals

## Patentansprüche

1. Vorrichtung zur Erhöhung der Qualität der Schweißnaht beim Rührreibschweißen, die
eine Aufnahmeplatte (1) mit einem Antriebskopf (2) aufweist, wobei dieser einen Aufnahmeflansch (19) zur Aufnahme einer Halteglocke (3) aufweist, die mittels einer Überwurfmutter (7) mit einem Schweißschuh (4) mit einer Schweißpin-Spitze (5) verbunden ist, der Schweißschuh (4) eine kreisrunde Grundform aufweist, auf der sich, über den Querschnitt verlaufend und im rechten Winkel zu dieser Grundform erhebend, ein Quersteg befindet, der ungefähr die Breite von 1/4 bis 1/5 des Durchmessers der Grundform aufweist und eine bogenförmige Schuh-Gleitfläche und Schuh-Glättfläche (9) aufweist, wobei sich auf jeder Seite dieser Fläche (9) im Bereich des Randes dieser Fläche (9) eine kleine ebene Fläche in der Form einer kerbartigen Verjüngung (16) befindet, mit einem Schweisspin-Haltekegel (24) und einer Halteglocke (3), **gekennzeichnet durch** eine druckerzeugende Vorrichtung, die über einen zwischen dem Schweißpin-Haltekegel (24) und der Halteglocke (3) bestehenden Spalt einen Überdruck in der Halteglocke (3) erzeugt, der dafür sorgt, dass Verschmutzungen am Werkzeug weitgehend beseitigt werden, wobei mittels dieser Anlage auch durch die Messung des am Werkzeug herrschenden Gegendrucks ermittelt werden kann, ob der Austrittsbereich (8) am Schweißschuh (4) verstopft oder frei ist,
die Schweißpin-Spitze (5) im Wesentlichen eine Oberflächenstruktur in der Form eines spitz zulaufenden Gewindes aufweist, wobei diese gewindeähnliche Struktur nicht rein kreisförmig angeordnet ist, sondern in jedem Gewindegang drei am Umfang verteile Abplattungen aufweist, wobei die Zentren dieser Abplattungen jeweils in einem Winkel von 120 Grad zueinander stehen und wobei die Steigung dieser gewindeähnlichen Struktur 0,5 mm beträgt und die Flankenhöhe von 0,25 mm bis 0,05 mm variiert, und
jede der kerbartigen Verjüngungen (16) als ein mehrere Millimeter hoher Absatz ausgebildet ist.

2. Vorrichtung nach Anspruch 1, **dadurch gekennzeichnet, dass** der Anpressdruck der Schuh-Gleitfläche und Schuh-Glättfläche (9) einstellbar ist, und die jeweilige Einstellung gemessen und angezeigt wird.

3. Vorrichtung nach Anspruch 1 oder 2, **dadurch gekennzeichnet, dass** das Ergebnis des Schweißprozesses optisch überwacht wird.

4. Verfahren zur Erhöhung der Qualität der Schweißnaht beim Rührreibschweißen mit den folgenden Merkmalen:
a) zu Beginn des Schweißprozesses taucht eine Schweißpin-Spitze (5) in einem Schweißschuh (4) vom Antriebskopf (2) mittels einer Halteglocke (3) als Schweißwerkzeug geführt während einer Pin-Eintauchstrecke (10) in das zu fügende Bauteil (6) ein,
b) sodann erfolgt der eigentliche Schweißvorgang während einer Schweißstrecke (11) solange bis die geplante Schweißnaht abgearbeitet ist, wobei mittels einer druckerzeugenden Vorrichtung ein Überdruck in der Halteglocke (3) erzeugt wird, der dafür sorgt, dass Verschmutzungen am Werkzeug weitgehend beseitigt werden, wobei mittels dieser Anlage auch durch die Messung des am Werkzeug herrschenden Gegendrucks ermittelt werden kann, ob ein Austrittsbereich (8) am Schweißschuh (4) verstopft oder frei ist, wobei die Schweißpin-Spitze (5) im Wesentlichen eine Oberflächenstruktur in der Form eines spitz zulaufenden Gewindes aufweist, wobei diese gewindeähnliche Struktur nicht rein kreisförmig angeordnet ist, sondern in jedem Gewindegang drei am Umfang verteilte Abplattungen aufweist, wobei die Zentren dieser Abplattungen jeweils in einem Winkel von 120 Grad zueinander stehen, und wobei der Anstellwinkel (12) des Schweißwerkzeugs gegen die Vertikale bis zum Ende der Schweißstrecke (11) beibehalten wird,
c) in der folgenden Pin-Auslaufstrecke (13) wird das Schweißwerkzeug wieder aus dem zu fügenden Bauteil (6) herausgezogen, wobei sich der Anstellwinkel (12) bis zum Ende der Pin-Auslaufstrecke (13) bis zum Pin-Ausdrehwinkel (15) kontinuierlich langsam vergrößert,
d) in der folgenden Pin-Ausdrehstrecke (14) wird das Schweißwerkzeug in der Weise von dem zu fügenden Bauteil (6) entfernt, dass der zu Beginn der Ausdrehstrecke (14) bestehende Ausdrehwinkel (15) gegen die Vertikale sich weiter vergrößert und sich das Schweißwerkzeug kontinuierlich von dem zu fügenden Bauteil (6) ohne die Bildung eines Lochs entfernt.

5. Verfahren nach Anspruch 4, **dadurch gekennzeichnet, dass** der Anpressdruck einer Schuh-Gleitfläche und Schuh-Glättfläche (9) einstellbar ist, und die jeweilige Einstellung gemessen, geregelt und angezeigt wird.

## Claims

1. Device for increasing the quality of the weld seam in friction stir welding, which
has a receptacle plate (1) having a drive head (2), wherein the latter has a receptacle flange (19) for receiving a mounting bell (3) which by means of a union nut (7) is connected to a welding shoe (4) having a welding pin tip (5), the welding shoe (4) has a circular basic shape on which a transverse web, running across the cross section and rising orthogonally to this basic shape, is located which has approximately the width of 1/4 to 1/5 of the diameter of the basic shape and has an arcuate shoe sliding face and shoe smooth face (9), wherein a small planar face in the form of a notch-type tapering (16) is located on each side of this face (9) in the region of the periphery of this face (9), having a welding mounting conus (24) and a mounting bell (3),
**characterized by**
a pressure-generating device which, by way of a gap which exists between the welding pin mounting conus (24) and the mounting bell (3), generates a positive pressure, which ensures that contaminations on the tool are largely removed, in the mounting bell (3), wherein by means of this system it may be determined also by measuring the counter-pressure prevailing on the tool whether the exit region (8) on the welding shoe (4) is clogged or free,
the welding pin tip (5) has a surface structure which is substantially in the form of a heavily tapered thread, wherein this thread-like structure is not disposed so as to be purely circular but in each thread pitch has three flat spots which are distributed on the circumference, wherein the centers of these flat spots each are mutually placed at an angle of 120 degrees, and wherein the lead of this thread-like structure is 0.5 mm and the flank height varies from 0.25 mm to 0.05 mm, and
each of the notch-type taperings (16) is configured as a step with a height of a plurality of millimeters.

2. Device according to Claim 1, **characterized in that** the contact pressure of the shoe sliding face and of the shoe smooth face (9) is adjustable, the respective adjustment being measured and displayed.

3. Device according to Claim 1 or 2, **characterized in that** the result of the welding process is optically monitored.

4. Method for increasing the quality of the weld seam in friction stir welding, the method having the following features:
a) at the beginning of the welding process a welding pin tip (5) in a welding shoe (4), guided as welding tool by the drive head (2) by means of a mounting bell (3), in a pin plunging path (10) plunges into the component (6) to be joined;
b) thereupon the actual welding procedure is performed in a welding path (11) until the planned weld seam has been completely processed, wherein a positive pressure which ensures that contaminations on the tool are largely removed is generated in the mounting bell (3) by means of a pressure-generating device, wherein by means of this system it may be determined also by measuring the counter-pressure prevailing on the tool whether an exit region (8) on an the welding shoe (4) is clogged or free, wherein the welding pin tip (5) has a surface structure which is substantially in the form of a heavily tapered thread, wherein this thread-like structure is not disposed so as to be purely circular but in each thread pitch has three flat spots which are distributed on the circumference, wherein the centers of these flat spots each are mutually placed at an angle of 120 degrees, and wherein the setting angle (12) of the welding tool in relation to the vertical is maintained up to the end of the welding path (11);
c) in the following pin run-out path (13) the welding tool is again withdrawn from the component (6) to be joined, wherein the setting angle (12) slowly and continuously increases up to the end of the pin run-out path (13) up to the pin spin-out angle (15);
d) in the following pin spin-out path (14) the welding tool is removed from the component (6) to be joined in such a manner that the spin-out angle (15) in relation to the vertical, which exists at the beginning of the spin-out path (14), increases further, the welding tool continuously moving away from the component (6) to be joined, without forming a hole.

5. Method according to Claim 4, **characterized in that** the contact pressure of a shoe sliding face and of a shoe smooth face (9) is adjustable, the respective adjustment being measured, regulated, and displayed.

## Revendications

1. Dispositif pour augmenter la qualité du joint de soudure dans le soudage par agitation-friction, présentant une plaque de réception (1) avec une tête d'entraînement (2), celle-ci présentant une bride de réception (19) pour recevoir une cloche de retenue (3) qui est connectée au moyen d'un écrou d'accouplement (7) à un patin de soudage (4) avec une pointe de clou de soudage (5), le patin de soudage (4) présentant une forme de base ronde circulaire sur laquelle se trouve une nervure transversale s'étendant sur la section transversale et rehaussée à angle droit par rapport à cette forme de base, qui présente approximativement une largeur de 1/4 à 1/5 du diamètre de la forme de base et qui présente une surface de glissement de patin et une surface de lissage de patin (9) de forme arquée, de chaque côté de cette surface (9), dans la région du bord de cette surface (9), se trouvant une petite surface plane sous la forme d'un rétrécissement de type entaille (16) avec un cône de retenue de clou de soudage (24) et une cloche de retenue (3),
**caractérisé par**
un dispositif de génération de pression qui génère, par le biais d'une fente existant entre le cône de retenue de clou de soudage (24) et la cloche de retenue (3) une surpression dans la cloche de retenue (3) qui fait en sorte que des salissures au niveau de l'outil soient largement éliminées, cette installation permettant aussi, par la mesure de la contre-pression appliquée au niveau de l'outil, d'établir si la région de sortie (8) au niveau du patin de soudage (4) est obstruée ou est libre,
la pointe de clou de soudage (5) présentant essentiellement une structure de surface en forme de filetage se terminant en pointe, cette structure de type filetage n'étant pas disposée de manière purement circulaire mais présentant dans chaque pas de filetage trois méplats répartis sur la périphérie, les centres de ces méplats étant disposés à chaque fois suivant un angle de 120° les uns par rapport aux autres, et la pente de cette structure de type filetage étant de 0,5 mm et la hauteur de flanc variant de 0,25 mm à 0,05 mm, et
chacun des rétrécissements de type entaille (16) étant réalisé sous la forme d'un épaulement de plusieurs millimètres de haut.

2. Dispositif selon la revendication 1, **caractérisé en ce que** la pression de pressage de la surface de glissement de patin et de la surface de lissage de patin (9) peut être ajustée et l'ajustement respectif est mesuré et affiché.

3. Dispositif selon la revendication 1 ou 2, **caractérisé en ce que** le résultat du processus de soudage est contrôlé optiquement.

4. Procédé pour augmenter la qualité du joint de soudure dans le soudage par agitation-friction, comprenant les caractéristiques suivantes :
a) au début du processus de soudage, une pointe de clou de soudage (5) dans un patin de soudage (4) est enfoncée de manière guidée par la tête d'entraînement (2) au moyen d'une cloche de retenue (3) en tant qu'outil de soudage pendant une étape d'enfoncement de clou (10) dans le composant à assembler (6),
b) ensuite a lieu l'opération de soudage proprement dite pendant une étape de soudage (11) jusqu'à ce que le joint de soudure prévu soit réalisé, au moyen d'un dispositif de génération de pression, une surpression étant produite dans la cloche de retenue (3), laquelle fait en sorte que des salissures au niveau de l'outil soient largement éliminées, cette installation permettant aussi, par la mesure de la contre-pression appliquée au niveau de l'outil, d'établir si une région de sortie (8) au niveau du patin de soudage (4) est obstruée ou est libre, la pointe de clou de soudage (5) présentant essentiellement une structure de surface en forme de filetage se terminant en pointe, cette structure de type filetage n'étant pas disposée de manière purement circulaire mais présentant dans chaque pas de filetage trois méplats répartis sur la périphérie, les centres de ces méplats étant disposés à chaque fois suivant un angle de 120° les uns par rapport aux autres, et l'angle d'inclinaison (12) de l'outil de soudage par rapport à la verticale étant conservé jusqu'à la fin de l'étape de soudage (11),
c) dans l'étape de sortie de clou suivante (13), l'outil de soudage est à nouveau retiré du composant à assembler (6), l'angle d'inclinaison (12) augmentant lentement de manière continue jusqu'à l'angle de dévissage du clou (15) jusqu'à la fin de l'étape de sortie de clou (13),
d) dans l'étape suivante de dévissage du clou (14), l'outil de soudage est enlevé du composant à assembler (6) de telle sorte que l'angle de dévissage (15) existant au début de l'étape de dévissage (14) augmente davantage par rapport à la verticale et que l'outil de soudage s'éloigne en continu du composant à assembler (6) sans former de trou.

5. Procédé selon la revendication 4, **caractérisé en ce que** la pression de pressage d'une surface de glissement de patin et d'une surface de lissage de patin (9) peut être ajustée, et l'ajustement respectif est mesuré, régulé et affiché.
